# EUROPEAN PATENT APPLICATION

(11) **EP 4 228 081 A1**
(43) Date of publication of application: **16.08.2023**
(21) Application number: 23155376.9
(22) Date of filing: 07.02.2023
(51) Int. Cl.: H01M 50/533, H01M 50/553, H01M 50/562, H01M 50/566, H01M 50/567, B23K 26/22

(54) **BATTERY AND BATTERY MANUFACTURING METHOD**

(30) Priority: 14.02.2022 JP 2022020547
(71) Applicant: Prime Planet Energy & Solutions, Inc., Chuo-ku Tokyo 103-0022 (JP)
(72) Inventor: MIYAMURA, Yukinobu, Tokyo, 103-0022 (JP)
(74) Representative: Kuhnen & Wacker Patent- und Rechtsanwaltsbüro PartG mbB

(57) **Abstract**

A battery (100) disclosed herein includes a terminal (40). The terminal (40) includes: a first conductive member (41) having a plate shape; a second conductive member (42) including a flange (42f) electrically connected to the first conductive member (41); a fastener (43) mechanically securing the first conductive member (41) and the flange (42f) of the second conductive member (42) to each other; and a metal joint (45) metal-joining the first conductive member (41) and the flange (42f) of the second conductive member (42) to each other at a location away from the fastener (43). The metal joint (45) includes a first connection region (45a) and a second connection region (45b). The second connection region (45b) is located closer to a center of the flange (42f) than the first connection region (45a).

## Description

### BACKGROUND OF THE DISCLOSURE

### 1. Field

This application relates to batteries and battery manufacturing methods.

### 2. Background

Usually, batteries, such as lithium ion secondary batteries, each include: an electrode body including electrodes; and a battery case housing the electrode body. A battery of this type further includes terminals that are electrically connected to the electrodes inside the battery case and are protruded out of the battery case. Examples of conventional techniques related to such terminals include providing a terminal structure disclosed in Japanese Patent No. 6216368. The terminal structure includes: a rivet member electrically connected to an electrode inside a battery case, inserted through a through hole of the battery case, and protruded out of the battery case; and a conductive member including a first through hole through which the rivet member is inserted and electrically connecting the rivet member to an external connection terminal bolt. The technique disclosed in Japanese Patent No. 6216368 involves inserting the rivet member through the first through hole of the conductive member and swaging an end of the rivet member in an up-down direction. As a result, the rivet member is swaged to a portion of the conductive member defining the peripheral edge of the first through hole and is thus electrically connected to the conductive member.

### SUMMARY

If external force, such as vibrations or an impact, is applied to a terminal of a battery in use, force may be exerted on the terminal, for example, in an up-down direction (or tensile direction) and/or in the direction of rotation. Such force may cause the swaged portion to become unsteady and suffer distortion, which may create a gap between the rivet member and the conductive member. Unfortunately, such a gap may make the conductive connection of the terminal unstable or cause a connection failure of the terminal. Thus, what is needed is to improve the conduction reliability of the terminal. From the viewpoint of enhancing battery performance, a wide conduction path is desirably provided inside the terminal so as to reduce conduction resistance.

Accordingly, embodiments of the present application provide batteries including terminals that offer improved conduction reliability and reduced conduction resistance, and methos for manufacturing the batteries.

An embodiment of the present application provides a battery including a terminal. The terminal includes: a first conductive member having a plate shape; a second conductive member including a flange electrically connected to the first conductive member; a fastener mechanically securing the first conductive member and the flange of the second conductive member to each other; and a metal joint metal-joining the first conductive member and the flange of the second conductive member to each other at a location away from the fastener. The metal joint includes a first connection region and a second connection region. The second connection region is located closer to a center of the flange than the first connection region in a plan view.

The terminal includes two types of connectors, i.e., the fastener and the metal joint, which make connections in different ways. Thus, if vibrations and/or an impact, for example, are/is externally applied to the terminal, the connectors would be unlikely to be distorted, and intimate contact between the first conductive member and the second conductive member would be likely to be maintained. Accordingly, a conductive connection between the first conductive member and the second conductive member is stably maintainable, resulting in improved conduction reliability. Providing the metal joint including the first connection region and the second connection region increases the area of connection between the first conductive member and the second conductive member. This makes it possible to reduce conduction resistance of the metal joint, resulting in reduced resistance of the battery and leading to less heat generated by resistance of the metal joint.

Another embodiment of the present application provides a battery manufacturing method. The manufacturing method includes manufacturing a terminal. The terminal includes: a first conductive member having a plate shape; a second conductive member including a flange electrically connected to the first conductive member; a fastener mechanically securing the first conductive member and the flange of the second conductive member to each other; and a metal joint metal-joining the first conductive member and the flange of the second conductive member to each other at a location away from the fastener. The metal joint is disposed closer to a center of the flange than the fastener in a plan view. The metal joint includes a first connection region and a second connection region. The second connection region is located closer to the center of the flange than the first connection region in the plan view. A portion of the first conductive member located closer to the center of the flange than the metal joint in the plan view is provided with a through hole. In forming the metal joint, the manufacturing method includes forming the first connection region and then forming the second connection region.

The manufacturing method enables gas and/or heat produced during formation (e.g., welding) of the metal joint to be smoothly released and/or dispersed through the through hole. The manufacturing method is thus able to stably form the metal joint. The manufacturing method also allows distortion and/or deformation caused by heat during formation (e.g., welding) of the metal joint to escape to the through hole. This makes it possible to reduce the influence of such distortion and/or deformation on the fastener and/or other component(s). Consequently, the manufacturing method is able to stably manufacture batteries including terminals of improved conduction reliability.

### BRIEF DESCRIPTION OF THE DRAWINGS

FIG. 1 is a schematic perspective view of a battery according to an embodiment of the present application.
FIG. 2 is a schematic, vertical cross-sectional view of the battery taken along the line II-II in FIG. 1.
FIG. 3 is a partially enlarged cross-sectional view of the battery, schematically illustrating a negative electrode terminal and components adjacent thereto.
FIG. 4 is a schematic plan view of the negative electrode terminal according to the present embodiment.
FIG. 5 is a schematic, vertical cross-sectional view of the negative electrode terminal taken along the line V-V in FIG. 4.
FIG. 6 is a schematic bottom view of the negative electrode terminal illustrated in FIG. 4.
FIG. 7 is a schematic side view of the negative electrode terminal illustrated in FIG. 4.
FIG. 8 is a schematic perspective view of a battery pack according to the present embodiment.
FIG. 9 is a schematic plan view of a connection of a negative electrode terminal according to a first variation.
FIG. 10 is a schematic plan view of a connection of a negative electrode terminal according to a second variation.
FIG. 11 is a schematic plan view of a connection of a negative electrode terminal according to a third variation.

### DETAILED DESCRIPTION OF THE PREFERRED EMBODIMENTS

A preferred embodiment of techniques disclosed herein will be described below with reference to the drawings. Matters that are necessary for carrying out the present application but are not specifically mentioned herein (e.g., common battery structures and battery manufacturing processes that do not characterize the present application) may be understood by those skilled in the art as design matters based on techniques known in the related art. The present application may be carried out on the basis of the disclosure provided herein and common technical knowledge in the related art.

As used herein, the term "battery" refers to any of various electricity storage devices from which electric energy is derivable, and is a concept encompassing primary batteries and secondary batteries. As used herein, the term "secondary battery" refers to any of various electricity storage devices that are repeatedly chargeable and dischargeable, and is a concept encompassing storage batteries (or chemical batteries), such as lithium ion secondary batteries and nickel-metal hydride batteries, and capacitors (or physical batteries), such as electric double layer capacitors.

### Battery 100

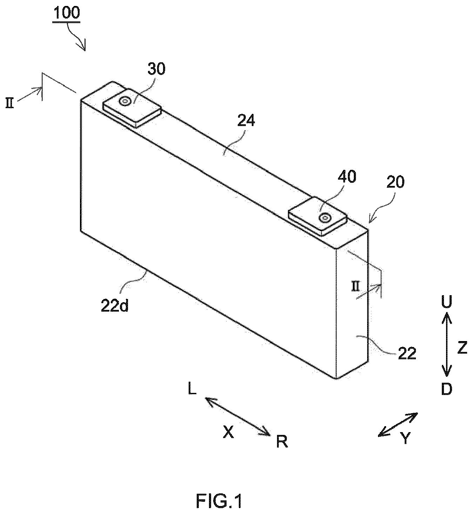

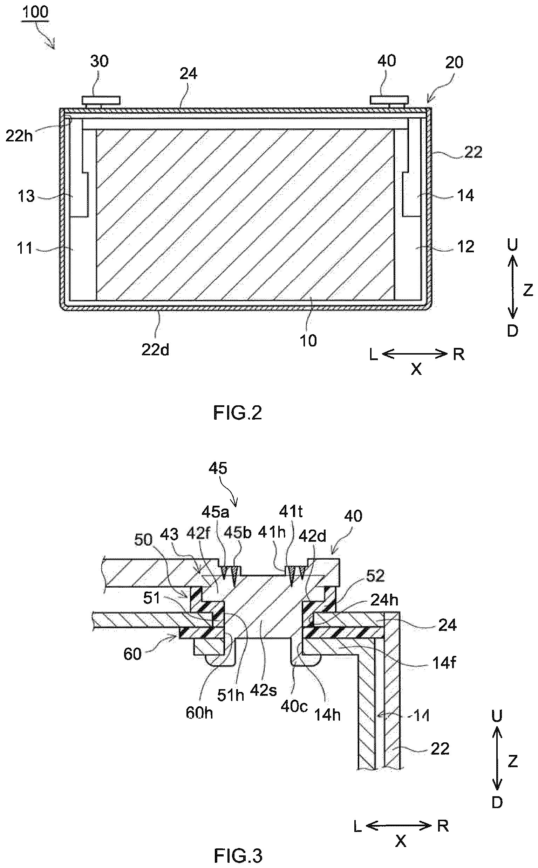

FIG. 1 is a perspective view of a battery 100. FIG. 2 is a schematic, vertical cross-sectional view of the battery 100 taken along the line II-II in FIG. 1. In the following description, the reference signs L, R, U, and D in the drawings respectively represent left, right, up, and down. The reference sign X in the drawings represents a longitudinal direction of the battery 100. The reference sign Y in the drawings represents a width direction perpendicular or substantially perpendicular to the longitudinal direction X. The reference sign Z in the drawings represents an up-down direction. These directions, however, are defined merely for the sake of convenience of description and do not limit in any way how the battery 100 may be installed.

As illustrated in FIG. 2, the battery 100 includes an electrode body 10, a battery case 20, a positive electrode terminal 30, and a negative electrode terminal 40. The battery 100 is characterized by including the positive electrode terminal 30 and/or the negative electrode terminal 40 disclosed herein. Other than this feature, the battery 100 may be similar to batteries known in the related art. In this embodiment, the battery 100 is a lithium ion secondary battery. Although not illustrated in FIG. 2, the battery 100 in this embodiment further includes an electrolyte. The battery 100 includes the electrode body 10 and the electrolyte (not illustrated) that are housed in the battery case 20.

The electrode body 10 may be similar to any electrode body known in the related art. The electrode body 10 includes a positive electrode (not illustrated) and a negative electrode (not illustrated). The electrode body 10 is, for example, a flat wound electrode body provided by: placing the positive and negative electrodes, each having a strip shape, on top of another, with the positive and negative electrodes insulated from each other with a strip-shaped separator interposed therebetween; and winding the positive and negative electrodes and the separator around a winding axis into a flat shape. Alternatively, the electrode body 10 may be a laminated electrode body provided by stacking the positive and negative electrodes, each having a quadrangular shape (which is typically a rectangular shape), on top of another such that the positive and negative electrodes are insulated from each other. The positive electrode includes a positive electrode collector 11 and a positive electrode compound layer (not illustrated) fixed onto the positive electrode collector 11. The positive electrode collector 11 is made of, for example, a conductive metal, such as aluminum, an aluminum alloy, nickel, or stainless steel. The positive electrode compound layer contains a positive electrode active material (e.g., a lithium transition metal composite oxide). The negative electrode includes a negative electrode collector 12 and a negative electrode compound layer (not illustrated) fixed onto the negative electrode collector 12. The negative electrode collector 12 is made of, for example, a conductive metal, such as copper, a copper alloy, nickel, or stainless steel. The negative electrode compound layer contains a negative electrode active material (e.g., a carbon material, such as graphite).

As indicated by the oblique lines in FIG. 2, a central portion of the electrode body 10 in the longitudinal direction X is provided with a laminated region in which the positive electrode compound layer and the negative electrode compound layer that are insulated from each other are laminated. At the left end of the electrode body 10 in the longitudinal direction X, a portion of the positive electrode collector 11 provided with no positive electrode compound layer (which hereinafter be referred to as a "positive electrode collector exposed portion") is protruded from the laminated region. The positive electrode collector exposed portion has a positive electrode lead member 13 attached thereto. The positive electrode lead member 13 may be made of a metal material similar to that used for the positive electrode collector 11. Examples of the metal material for the positive electrode lead member 13 may include conductive metals, such as aluminum, an aluminum alloy, nickel, and stainless steel. At the right end of the electrode body 10 in the longitudinal direction X, a portion of the negative electrode collector 12 provided with no negative electrode compound layer (which hereinafter be referred to as a "negative electrode collector exposed portion") is protruded from the laminated region. The negative electrode collector exposed portion has a negative electrode lead member 14 attached thereto. The negative electrode lead member 14 may be made of a metal material different from that used for the positive electrode lead member 13. The negative electrode lead member 14 may be made of a metal material similar to that used for the negative electrode collector 12. Examples of the metal material for the negative electrode lead member 14 may include conductive metals, such as copper, a copper alloy, nickel, and stainless steel.

The electrolyte may be any electrolyte known the related art. The electrolyte is, for example, a nonaqueous liquid electrolyte (or a nonaqueous electrolyte solution) containing a nonaqueous solvent and a supporting electrolyte. Examples of the nonaqueous solvent include carbonates, such as ethylene carbonate, dimethyl carbonate, and ethyl methyl carbonate. Examples of the supporting electrolyte include a fluorine-containing lithium salt, such as LiPF₆. Alternatively, the electrolyte may be in solid form (or may be a solid electrolyte) and may be integral with the electrode body 10.

The battery case 20 is a casing that houses the electrode body 10. In this embodiment, the battery case 20 has a flat cuboidal shape (or rectangular shape) with a bottom. The battery case 20, however, does not necessarily have to have a rectangular shape. The battery case 20 may have any other shape, such as a circular cylindrical shape. The battery case 20 may be made of any conventionally used material. The battery case 20 is made of, for example, a lightweight, highly thermally conductive metal material, such as aluminum, an aluminum alloy, or stainless steel. As illustrated in FIG. 2, the battery case 20 includes: a case body 22 including an opening 22h; and a lid (or sealing plate) 24 closing the opening 22h. The lid 24 is joined (e.g., welded) to the peripheral edge of the opening 22h of the case body 22 and is thus integral with the battery case 20. The battery case 20 is hermetically sealed (or hermetically closed) with the lid 24.

The case body 22 includes a flat bottom surface 22d. The lid 24 faces the bottom surface 22d of the case body 22. The lid 24 is attached to the case body 22 so as to close the opening 22h of the case body 22. In this embodiment, the lid 24 has a substantially rectangular shape. As used herein, the term "substantially rectangular shape" refers to not only a perfect rectangular shape (or a perfect oblong shape) but also various other rectangular shapes, such as a rectangular shape whose corners connecting short and long sides are rounded and a rectangular shape whose corners have cut-outs.

As illustrated in FIG. 1, the positive electrode terminal 30 and the negative electrode terminal 40 protrude out of the battery case 20. In this embodiment, the positive electrode terminal 30 and the negative electrode terminal 40 protrude from the same surface of the battery case 20. Specifically, the positive electrode terminal 30 and the negative electrode terminal 40 protrude from the lid 24. Alternatively, the positive electrode terminal 30 and the negative electrode terminal 40 may protrude from different surfaces of the battery case 20. The positive electrode terminal 30 and the negative electrode terminal 40 are each disposed on an associated one of the ends of the lid 24 in the longitudinal direction X. The positive electrode terminal 30 and/or the negative electrode terminal 40 are/is example(s) of a terminal disclosed herein.

As illustrated in FIG. 2, the positive electrode terminal 30 is electrically connected to the positive electrode of the electrode body 10 through the positive electrode lead member 13 inside the battery case 20. The negative electrode terminal 40 is electrically connected to the negative electrode of the electrode body 10 through the negative electrode lead member 14 inside the battery case 20. The positive electrode terminal 30 and the negative electrode terminal 40 are attached to the lid 24. The positive electrode terminal 30 and the negative electrode terminal 40 are each insulated from the lid 24 with a gasket 50 (see FIG. 3) and an insulator 60 (see FIG. 3).

FIG. 3 is a partially enlarged cross-sectional view of the battery 100, schematically illustrating the negative electrode terminal 40 and components adjacent thereto. A structure of the negative electrode terminal 40 will, by way of example, be described in detail below. The positive electrode terminal 30 may be similar in structure to the negative electrode terminal 40. Assuming that the positive electrode terminal 30 is similar in structure to the negative electrode terminal 40, the term "negative electrode" in the following description may be read as "positive electrode" when appropriate.

As illustrated in FIG. 3, the lid 24 is provided with a terminal insertion hole 24h passing through the lid 24 in the up-down direction Z. In a plan view, the terminal insertion hole 24h has, for example, a circular shape. The terminal insertion hole 24h has an inside diameter that allows insertion of a shaft column 42s (which will be described below) of the negative electrode terminal 40 yet to be swaged. The terminal insertion hole 24h is smaller than a flange 42f (which will be described below) of the negative electrode terminal 40.

The negative electrode lead member 14 is attached to the negative electrode collector exposed portion of the negative electrode collector 12. The negative electrode lead member 14 defines a conduction path through which the negative electrode is electrically connected to the negative electrode terminal 40. The negative electrode lead member 14 includes a flat portion 14f extending horizontally along an inner surface of the lid 24. The flat portion 14f is provided with a through hole 14h overlapping the terminal insertion hole 24h in the up-down direction Z. The through hole 14h has an inside diameter that allows insertion of the shaft column 42s (which will be described below) of the negative electrode terminal 40 yet to be swaged. The negative electrode lead member 14 that is insulated from the lid 24 with the insulator 60 is secured to the lid 24 by swaging,

The gasket 50 is an insulating member disposed between the upper surface (or outer surface) of the lid 24 and the negative electrode terminal 40. In this embodiment, the gasket 50 not only has the function of insulating the lid 24 and the negative electrode terminal 40 from each other, but also has the function of closing the terminal insertion hole 24h. The gasket 50 is made of an electrically insulating, elastically deformable resin material. Examples of such a material include: a fluorinated resin, such as perfluoroalkoxy alkane (PFA); polyphenylene sulfide (PPS); and aliphatic polyamide.

The gasket 50 includes a tubular portion 51 and a base portion 52. The tubular portion 51 prevents direct contact between the lid 24 and the shaft column 42s of the negative electrode terminal 40. The tubular portion 51 has a hollow cylindrical shape. The tubular portion 51 includes a through hole 51h passing through the tubular portion 51 in the up-down direction Z. The through hole 51h allows insertion of the shaft column 42s of the negative electrode terminal 40 yet to be swaged. The tubular portion 51 is inserted through the terminal insertion hole 24h of the lid 24. The base portion 52 prevents direct contact between the lid 24 and the flange 42f (which will be described below) of the negative electrode terminal 40. The base portion 52 is connected to the upper end of the tubular portion 51. The base portion 52 extends horizontally from the upper end of the tubular portion 51. The base portion 52 has, for example, a ring shape such that the base portion 52 is located around the terminal insertion hole 24h of the lid 24. The base portion 52 extends along the upper surface of the lid 24. The base portion 52 is sandwiched between a lower surface 42d of the flange 42f of the negative electrode terminal 40 and the upper surface of the lid 24 and is compressed in the up-down direction Z by swaging.

The insulator 60 is an insulating member disposed between the lower surface (or inner surface) of the lid 24 and the negative electrode lead member 14. The insulator 60 has the function of insulating the lid 24 and the negative electrode lead member 14 from each other. The insulator 60 includes a flat portion extending horizontally along the inner surface of the lid 24. This flat portion is provided with a through hole 60h overlapping the terminal insertion hole 24h in the up-down direction Z. The through hole 60h has an inside diameter that allows insertion of the shaft column 42s of the negative electrode terminal 40. The insulator 60 is made of an electrically insulating, elastically deformable resin material resistant to an electrolyte to be used. Examples of such a material include: a fluorinated resin, such as perfluoroalkoxy alkane (PFA); and polyphenylene sulfide (PPS). The flat portion of the insulator 60 is sandwiched between the lower surface of the lid 24 and the upper surface of the negative electrode lead member 14 and is compressed in the up-down direction Z by swaging.

### Negative Electrode Terminal 40

As illustrated in FIG. 3, the negative electrode terminal 40 passes through the terminal insertion hole 24h and extends from inside to outside of the battery case 20. As will be described below, the negative electrode terminal 40 includes two types of conductive members, i.e., a first conductive member 41 and a second conductive member 42, which are integral with each other through a fastener 43 and a metal joint 45. The negative electrode terminal 40 that is insulated from the lid 24 is secured by swaging to a portion of the lid 24 defining the peripheral edge of the terminal insertion hole 24h. The negative electrode terminal 40 is provided on its lower end with a rivet portion 40c. The negative electrode terminal 40 is secured to the lid 24 and electrically connected to the negative electrode lead member 14 by swaging.

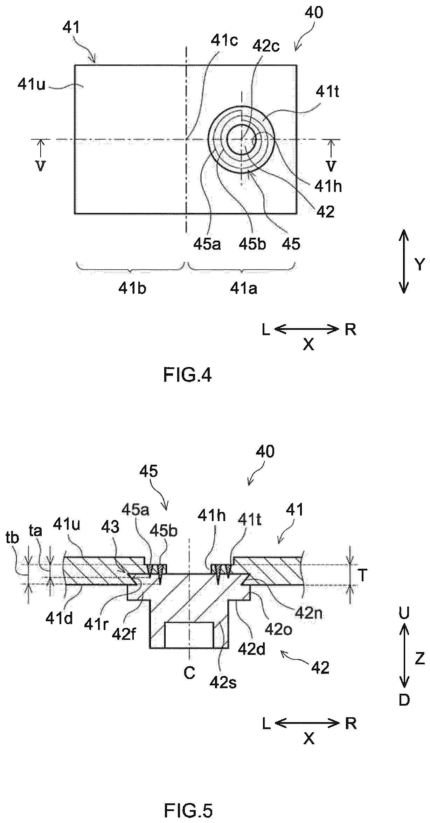

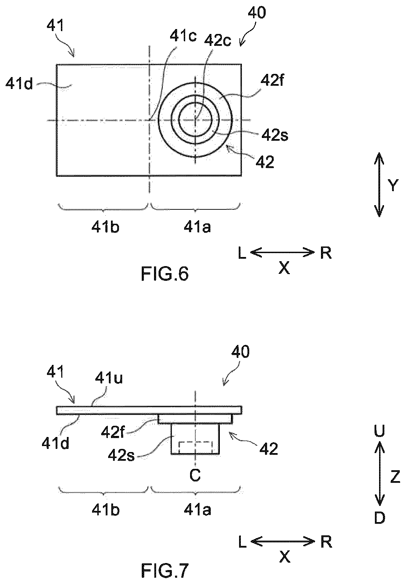

FIG. 4 is a schematic plan view of the negative electrode terminal 40 before being attached to the lid 24 (i.e., before being subjected to swaging). FIG. 5 is a schematic, vertical cross-sectional view of the negative electrode terminal 40 taken along the line V-V in FIG. 4. FIG. 5 is a vertical cross-sectional view of the negative electrode terminal 40, schematically illustrating main components of the negative electrode terminal 40. FIG. 6 is a bottom view of the negative electrode terminal 40 illustrated in FIG. 4. FIG. 7 is a side view of the negative electrode terminal 40 illustrated in FIG. 4.

As illustrated in FIG. 5, the negative electrode terminal 40 includes the first conductive member 41, the second conductive member 42, the fastener 43, and the metal joint 45. The first conductive member 41 and the second conductive member 42 are integral with each other through the fastener 43 and the metal joint 45 and are electrically connected to each other.

The first conductive member 41 is disposed outside the battery case 20. In this embodiment, the first conductive member 41 is made of metal. The first conductive member 41 is made of, for example, a conductive metal, such as aluminum, an aluminum alloy, nickel, or stainless steel. At least a portion of the first conductive member 41 located in the vicinity of the metal joint 45 is preferably made of aluminum or an aluminum alloy. In this embodiment, the first conductive member 41 is made of aluminum. In this embodiment, the first conductive member 41 is made of a metal lower in melting point than that used for the second conductive member 42. The first conductive member 41 may be made of a metal similar to that used for the positive electrode lead member 13. Alternatively, the first conductive member 41 may be made of an alloy whose first component is a metallic element similar to that used for the positive electrode lead member 13. As used herein, the term "first component" refers to a component whose percentage by mass is the highest among the components of an alloy.

As illustrated in FIGS. 4 to 7, the first conductive member 41 has a plate shape. In this embodiment, the first conductive member 41 has a flat plate shape. The first conductive member 41 includes a lower surface 41d and an upper surface 41u. The lower surface 41d is a surface of the first conductive member 41 that faces the battery case 20 (or more specifically, the lid 24). The lower surface 41d is a surface of the first conductive member 41 that is in contact with the second conductive member 42. The upper surface 41u is a surface of the first conductive member 41 located away from the battery case 20 and the second conductive member 42. In this embodiment, the first conductive member 41 has a substantially rectangular shape. As illustrated in FIGS. 6 and 7, the first conductive member 41 is divided into two portions, i.e., a connection 41a and an extension 41b, adjoining each other in the longitudinal direction X. Specifically, the first conductive member 41 includes: the connection 41a electrically connected to the second conductive member 42; and the extension 41b extending to one side (i.e., leftward in FIGS. 4 to 7) in the longitudinal direction X from the connection 41a.

As illustrated in FIG. 5, the connection 41a includes: a thin portion 41t (see also FIG. 4) thinner than the extension 41b; a through hole 41h passing through the first conductive member 41 in the up-down direction Z; and a recess 41r recessed from the lower surface 41d of the first conductive member 41. The thin portion 41t is provided with the metal joint 45. As illustrated in FIG. 4, the thin portion 41t has an annular shape (e.g., a ring shape) in the plan view.

As illustrated in FIG. 4, the through hole 41h has a circular shape in the plan view. The second conductive member 42 (or more specifically, the flange 42f described below) is exposed at the upper surface 41u of the first conductive member 41 through the through hole 41h. As illustrated in FIG. 5, the through hole 41h is defined in the center of the thin portion 41t when viewed in cross section. The through hole 41h is disposed radially inward of the fastener 43 and the metal joint 45. The through hole 41h may function as an escape route for distortion caused by gas and/or heat produced during formation (e.g., welding) of the metal joint 45. The through hole 41h thus allows escape of distortion and/or deformation caused by heat during formation (e.g., welding) of the metal joint 45, making it possible to reduce the influence of such distortion and/or deformation on the fastener 43 and/or other component(s).

As illustrated in FIG. 5, the recess 41r is disposed radially outward of the metal joint 45. Although not illustrated, the recess 41r has an annular shape (e.g., a ring shape) in the plan view. In this embodiment, the recess 41r is tapered such that the recess 41r decreases in diameter as it extends to the lower surface 41d of the first conductive member 41 (or toward the lower end of the second conductive member 42). A constricted portion 42n (which will be described below) of the second conductive member 42 is inserted into the recess 41r.

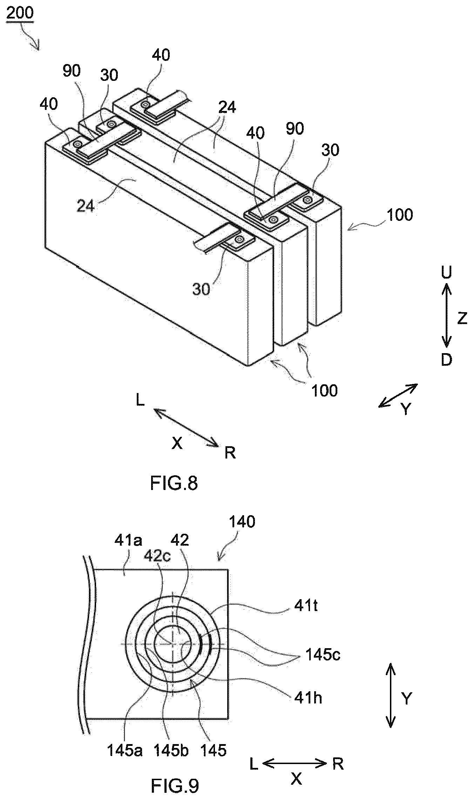

When a battery pack 200 (see FIG. 8) is fabricated by electrically connecting, for example, more than one battery 100 to each other, bus bars 90 (see FIG. 8), which are conductive members, are attached to the extensions 41b. Each first conductive member 41 including the extension 41b provides a sufficient area for contact with the associated bus bar 90, enabling the battery pack 200 to offer improved conduction reliability. As illustrated in FIGS. 4 and 6, each first conductive member 41 includes the extension 41b, so that a center 41c of each first conductive member 41 is shifted leftward in the longitudinal direction X relative to a center 42c of the associated second conductive member 42 (or more specifically, the center of the flange 42f described below). This facilitates attaching the bus bars 90 to the first conductive members 41 when the batteries 100 are electrically connected to each other through the bus bars 90. Consequently, the battery pack 200 is able to offer improved conduction reliability.

The second conductive member 42 extends from inside to outside of the battery case 20. In this embodiment, the second conductive member 42 is made of metal. The second conductive member 42 is made of, for example, a conductive metal, such as copper, a copper alloy, nickel, or stainless steel. A material for the second conductive member 42 (e.g., a first component of the second conductive member 42) may be similar to or different from that used for the first conductive member 41. In this embodiment, the second conductive member 42 is made of a metal higher in hardness than that used for the first conductive member 41. In this embodiment, the second conductive member 42 is made of a metal higher in melting point than that used for the first conductive member 41. At least a portion of the second conductive member 42 located in the vicinity of the metal joint 45 is preferably made of copper or a copper alloy. In this embodiment, the second conductive member 42 is made of copper. The second conductive member 42 may be made of a metal similar to that used for the negative electrode lead member 14. Alternatively, the second conductive member 42 may be made of an alloy whose first component is a metallic element similar to that used for the negative electrode lead member 14. A portion or an entirety of a surface of the second conductive member 42 may be coated with a metal, such as Ni. This coating is able to enhance resistance to the electrolyte, resulting in improved corrosion resistance.

The second conductive member 42 preferably has a columnar shape. In this embodiment, the second conductive member 42 has a substantially circular cylindrical shape. As illustrated in FIGS. 5 and 7, the second conductive member 42 includes an axis C. The second conductive member 42 includes: the flange 42f electrically connected to the first conductive member 41; and the shaft column 42s connected to the lower end of the flange 42f.

The flange 42f is located on the upper end of the shaft column 42s protruding out of the battery case 20 through the terminal insertion hole 24h of the lid 24. The flange 42f is larger in outer dimension than the shaft column 42s. As illustrated in FIG. 3, the flange 42f is larger in outer dimension than the terminal insertion hole 24h of the lid 24. As illustrated in FIGS. 5 to 7, the flange 42f in this embodiment has a substantially circular cylindrical outer shape. As illustrated in FIGS. 5 and 7, the axis of the flange 42f corresponds to the axis C of the second conductive member 42. As illustrated in FIG. 5, the flange 42f includes: the lower surface 42d; a side surface (or outer peripheral surface) 42o extending upward from the lower surface 42d; and the constricted portion 42n defined by a narrowed portion of the side surface 42o.

The constricted portion 42n is continuously or discontinuously provided on a portion of the side surface 42o of the flange 42f. Although not illustrated, the constricted portion 42n has an annular shape (e.g., a ring shape) in the plan view. The constricted portion 42n having an annular shape is able to increase the strength of the fastener 43. The constricted portion 42n is axisymmetric with respect to the axis C of the flange 42f. The constricted portion 42n is reversely tapered such that the constricted portion 42n increases in diameter toward the upper surface 41u (i.e., as the constricted portion 42n extends away from the shaft column 42s). The constricted portion 42n is inserted into the recess 41r of the first conductive member 41. In this embodiment, the constricted portion 42n is fitted into the recess 41r of the first conductive member 41. The constricted portion 42n is an example of the "portion of the second conductive member housed in the recess" disclosed herein.

As illustrated in FIG. 5, the shaft column 42s extends downward from the lower end of the flange 42f. As illustrated in FIGS. 5 and 7, the shaft column 42s in this embodiment has a cylindrical shape. The axis of the shaft column 42s corresponds to the axis C of the flange 42f. Before swaging is performed, the lower end of the shaft column 42s (which is an end of the shaft column 42s located opposite to the flange 42f) is hollow. As illustrated in FIG. 3, the shaft column 42s is inserted through the terminal insertion hole 24h of the lid 24 when the negative electrode terminal 40 is attached to the lid 24. When the negative electrode terminal 40 is attached to the lid 24, the lower end of the shaft column 42s is spread out by swaging so as to provide the rivet portion 40c. As a result of swaging, the shaft column 42s is electrically connected to the negative electrode lead member 14 inside the battery case 20.

The fastener 43 is a connector that mechanically secures the first conductive member 41 and the flange 42f of the second conductive member 42 to each other. In the present embodiment, the fastener 43 serving as the connector would provide sufficiently high connection strength if a fusion depth ta (see FIG. 5) is small in a first connection region 45a (which will be described below). As illustrated in FIG. 5, the fastener 43 in this embodiment is defined by the recess 41r and the constricted portion 42n disposed radially outward of the metal joint 45 when viewed in cross section. The fastener 43 has an annular shape (e.g., a ring shape) in the plan view. This increases the strength of the fastener 43 so as to further improve the conduction reliability of the negative electrode terminal 40. In this embodiment, the fastener 43 is formed continuously. In this embodiment, the fastener 43 is provided in the lower surface 41d of the first conductive member 41. Specifically, an inner wall of the recess 41r of the first conductive member 41 is secured (e.g., pressed and secured) with the constricted portion 42n of the second conductive member 42 so as to provide the fastener 43. The fastener 43 provided in this manner is increased in strength.

The fastener 43 may be formed by any method that involves establishing a mechanical connection by using mechanical energy. Examples of the method for forming the fastener 43 include press-fitting, swaging, shrinkage fitting, riveting, folding, and bolting. In some preferred modes, the fastener 43 is a fitted portion in which the recess 41r of the first conductive member 41 and the constricted portion 42n of the second conductive member 42 are fitted to each other. Such fitting would suitably secure the first conductive member 41 and the second conductive member 42 to each other if the first conductive member 41 and the second conductive member 42 are made of, for example, different metals. Such fitting is also able to improve the workability of forming the fastener 43. The fastener 43 may be, for example, a press-fitted portion in which the constricted portion 42n of the second conductive member 42 is press-fitted into the recess 41r of the first conductive member 41.

The metal joint 45 is a metallurgical joint between the first conductive member 41 and the flange 42f of the second conductive member 42. As illustrated in FIG. 5, the metal joint 45 in this embodiment is provided in the upper surface 41u (more specifically, the thin portion 41t) of the first conductive member 41. The metal joint 45 is disposed away from the through hole 41h. The metal joint 45 is disposed radially outward of the through hole 41h. The metal joint 45 is disposed away from the fastener 43. The metal joint 45 may be relatively more rigid than, for example, the fastener 43.

As indicated by FIG. 5, the metal joint 45 in this embodiment is disposed radially inward of (i.e., closer to the center of the flange 42f than) the fastener 43 in the plan view. In other words, the metal joint 45 is disposed closer to the center 42c of the second conductive member 42 than the fastener 43. Because the metal joint 45 is formed by using, for example, light energy, electronic energy, or thermal energy, the metal joint 45 may be relatively lower in strength than (or more brittle than) the fastener 43. The metal joint 45 disposed radially inward of the fastener 43 as described above is maintained in a stable state, making it possible to keep the conduction reliability of the negative electrode terminal 40 at a high level for a long period of time. In this embodiment, the metal joint 45 is provided in the thin portion 41t. Accordingly, this embodiment requires less energy in forming the metal joint 45 and provides improved weldability when the metal joint 45 is formed by welding. The metal joint 45 is formed continuously or discontinuously.

The metal joint 45 may be formed by any method. The metal joint 45 may be formed by, for example, fusion welding, pressure welding, or brazing. In some preferred modes, the metal joint 45 is, for example, a welded connection formed by welding, such as laser welding, electron beam welding, ultrasonic welding, resistance welding, or tungsten inert gas (TIG) welding. Such welding makes it possible to stably form the metal joint 45 of high strength. This embodiment involves performing welding such that portions of the first conductive member 41 and the second conductive member 42 are molten, fused together, and then solidified. The portions of the first conductive member 41 and the second conductive member 42 fused and solidified in this manner (which will each be referred to as a "fused and solidified portion") serve as the metal joint 45. Alternatively, the metal joint 45 may be formed by a method other than the welding methods just mentioned. The metal joint 45 may be formed by, for example, thermal compression, ultrasonic welding, or brazing.

As illustrated in FIG. 4, the metal joint 45 in this embodiment has a spiral shape. The metal joint 45 is provided such that the fused and solidified portions do not overlap each other in the plan view. The findings of the present inventor suggest that the fused and solidified portions are normally narrowed in a wedge-like manner as they extend away from a surface of the thin portion 41t to which energy is applied, i.e., as they increase in depth (see FIG. 5). Thus, when the fused and solidified portions of the metal joint 45 do not overlap each other in the plan view, the fused and solidified portions do not overlap each other at any position in the depth direction (i.e., the up-down direction). Because the fused and solidified portions are prevented from overlapping each other, the once-fused portions would be prevented from being fused together if they are molten again. This prevents or reduces alloying of the first conductive member 41 (Al) and the second conductive member 42 (Cu). The findings of the present inventor suggest that the strength of the metal joint 45 tends to decrease as alloying proceeds in the fused and solidified portions. Preventing the fused and solidified portions from overlapping each other as mentioned above makes it possible to prevent or reduce occurrence of cracks in the metal joint 45, resulting in improvements in the strength and durability of the metal joint 45. As will also be described in connection with variations below, the metal joint 45 may have a shape other than a spiral shape in the plan view. Alternatively, the fused and solidified portions of the metal joint 45 may partially overlap each other.

As illustrated in FIG. 4, the metal joint 45 has a winding shape in which the metal joint 45 winds around the axis C of the flange 42f more than once in such a manner as to surround the outer edge of the through hole 41h. Providing the metal joint 45 around the peripheral edge of the through hole 41h allows distortion and/or deformation caused by heat during welding to escape and thus reduces the influence of such distortion and/or deformation on the fastener 43 and/or other component(s).

The number of spiral windings is preferably 1.5 or more and more preferably 2 or more. In this embodiment, the number of windings is 2. The number of windings may be 3 or more. Setting the number of windings at or above a predetermined value (e.g., performing welding around the through hole 41h twice or more) increases the area of connection between the first conductive member 41 and the second conductive member 42, resulting in reduced conduction resistance of the metal joint 45. In addition, heat generated by resistance of the metal joint 45 is reduced, which reduces, for example, thermal effects on resin member(s), such as the gasket 50. If external force, such as vibrations or an impact, is applied to the negative electrode terminal 40 (or in particular, if external force is applied to the negative electrode terminal 40 in the direction of rotation), intimate contact between the first conductive member 41 and the second conductive member 42 would be likely to be maintained.

As illustrated in FIGS. 4 and 5, the metal joint 45 includes the first connection region 45a and a second connection region 45b located at different distances from the center 42c of the flange 42f. In this embodiment, the first connection region 45a and the second connection region 45b are formed continuously. The first connection region 45a is located radially outward of the second connection region 45b (or located farther away from the center 42c of the flange 42f than the second connection region 45b). In this embodiment, the first connection region 45a defines the radially outermost periphery of the metal joint 45. The second connection region 45b is located radially inward of the first connection region 45a (or located closer to the center 42c of the flange 42f than the first connection region 45a). In other words, the second connection region 45b is located closer to the axis C of the second conductive member 42 than the first connection region 45a. In this embodiment, the second connection region 45b defines the radially innermost periphery of the metal joint 45. Providing the first connection region 45a and the second connection region 45b in this manner increases the area of connection between the first conductive member 41 and the second conductive member 42, making it possible to reduce conduction resistance and thermal effects on resin member(s) as mentioned above. In this embodiment, the first connection region 45a and the second connection region 45b are provided along the entire circumference of an imaginary circle drawn around the center 42c of the flange 42f. In this embodiment, the first connection region 45a and the second connection region 45b are provided such that they surround the outer edge of the through hole 41h.

Suppose that as illustrated in FIG. 4, the connection 41a of the first conductive member 41 is divided, along a perpendicular line passing through the center 42c of the flange 42f, into two portions adjoining each other in the longitudinal direction X in the plan view. In this case, at least portions of the first connection region 45a and the second connection region 45b closer to the extension 41b (i.e., the left portions of the first connection region 45a and the second connection region 45b in FIG. 4) are preferably each formed continuously. The first connection region 45a and the second connection region 45b are preferably provided on the shortest (or linear) conduction path leading to the associated bus bar 90 (see FIG. 8). In this embodiment, the first connection region 45a and the second connection region 45b are preferably provided on a straight line that connects the center 42c of the flange 42f to a point on the first connection region 45a located closest to the extension 41b and extends to the extension 41b. Such an arrangement makes it possible to effectively reduce the resistance of the battery pack 200 (see FIG. 8).

As illustrated in FIG. 5, in this embodiment, the fusion depth ta of the radially outwardly located first connection region 45a is smaller than a fusion depth tb of the radially inwardly located second connection region 45b as viewed in cross section. In other words, in this embodiment, the concentration of the second conductive member 42 (Cu) fused into the first conductive member 41 (Al) is relatively low in the first connection region 45a located away from the center 42c of the flange 42f. The findings of the present inventor reveal that the strength of the metal joint 45 tends to decrease as the proportion of Cu in the fused and solidified portions increases, but making the fusion depth of the radially outermost fused and solidified portion smaller as mentioned above enables the metal joint 45 to have increased strength to withstand, in particular, a load applied in the direction of rotation. In the present embodiment, the negative electrode terminal 40 includes not only the metal joint 45 but also the fastener 43. Thus, if penetration of the second conductive member 42 into the first conductive member 41 is reduced in the first connection region 45a, the present embodiment would enable the connectors to suitably maintain connection strength. In this embodiment, the cross-sectional area of the fused and solidified portion is relatively large in the second connection region 45b located close to the center 42c of the flange 42f. This enables the metal joint 45 to not only have increased strength to withstand, in particular, a load applied in the up-down direction Z (or the tensile direction) but also have reduced conduction resistance.

Alternatively, the first connection region 45a and the second connection region 45b may be equal in fusion depth (which means that the fusion depths ta and tb may be equal). When the first connection region 45a and the second connection region 45b are formed continuously, the fusion depth may decrease in a gradual or stepwise manner from the first connection region 45a to the second connection region 45b. A fusion depth adjusting method will be described in detail in connection with a manufacturing method discussed below.

In this embodiment, the fusion depth ta of the first connection region 45a is smaller than a thickness of the first conductive member 41 measured between the upper surface 41u and the lower surface 41d, and is smaller than a thickness T of the thin portion 41t of the first conductive member 41 (which is the thickness of a portion of the first conductive member 41 adjacent to the first connection region 45a). Accordingly, the strength of the metal joint 45 to withstand, in particular, a load applied in the direction of rotation is maintainable at a higher level.

As described above, the negative electrode terminal 40 includes two types of connectors, i.e., the fastener 43 and the metal joint 45, which make connections in different ways. Thus, if vibrations and/or an impact, for example, are/is externally applied to the negative electrode terminal 40, the negative electrode terminal 40 would be unlikely to be distorted or deformed, and intimate contact between the first conductive member 41 and the second conductive member 42 would be likely to be maintained. In other words, the first conductive member 41 and the second conductive member 42 are unlikely to be separated from each other. Accordingly, a conductive connection between the first conductive member 41 and the second conductive member 42 is stably maintainable, resulting in improved conduction reliability of the negative electrode terminal 40. Providing the metal joint 45 including the first connection region 45a and the second connection region 45b increases the area of connection between the first conductive member 41 and the second conductive member 42. This makes it possible to reduce conduction resistance of the metal joint 45, resulting in reduced resistance of the battery 100. In addition, heat generated by resistance of the metal joint 45 is reduced, which reduces, for example, thermal effects on resin member(s), such as the gasket 50. The techniques disclosed herein achieve these advantageous effects and are thus able to provide the battery 100 including the negative electrode terminal 40 that offers reduced resistance and improved conduction reliability.

### Method for Manufacturing Negative Electrode Terminal 40

The negative electrode terminal 40 may be manufactured by any method. The negative electrode terminal 40 may be manufactured by, for example, a manufacturing method that involves preparing the first conductive member 41 and the second conductive member 42 described above and includes: a fastening step for forming the fastener 43; and a metal joining step for forming the metal joint 45. The fastening step and the metal joining step may be performed in any order. From the viewpoint of preventing or reducing damage to the metal joint 45 during formation of the fastener 43, the metal joining step is preferably performed after the fastening step. Alternatively, the fastening step may be performed after the metal joining step, or both of the steps may be performed substantially simultaneously. The manufacturing method disclosed herein may further include other step(s) at any stage(s).

The fastening step involves mechanically securing the first conductive member 41 and the flange 42f of the second conductive member 42 to each other so as to form the fastener 43. In one example, the fastener 43 may be formed by inserting the constricted portion 42n of the second conductive member 42 into the recess 41r of the first conductive member 41, and deforming the recess 41r of the first conductive member 41 along the outer shape of the constricted portion 42n of the second conductive member 42 so as to secure the inner wall of the recess 41r with the second conductive member 42. This makes it possible to increase the strength of the resulting fastener 43. In some preferred modes, the fastener 43 is formed by fitting the recess 41r of the first conductive member 41 and the constricted portion 42n of the second conductive member 42 to each other. The fastener 43 may be formed by, for example, horizontally press-fitting the constricted portion 42n of the second conductive member 42 to the recess 41r of the first conductive member 41. Such press-fitting is able to improve the workability of the fastening step.

The metal joining step involves metal-joining (i.e., metallurgically connecting) the thin portion 41t of the first conductive member 41 and the flange 42f of the second conductive member 42 to each other so as to form the metal joint 45. Performing the metal joining step after the fastening step makes it possible to accurately form the metal joint 45 stable in shape. Thus, the conductive connection between the first conductive member 41 and the second conductive member 42 is stably maintainable, making it possible to suitably manufacture the battery 100 including the negative electrode terminal 40 that offers improved conduction reliability. In one example, the metal joint 45 may be formed by welding that involves applying a beam of energy to the thin portion 41t of the first conductive member 41, with the thin portion 41t located on the flange 42f of the second conductive member 42, such that the energy passes through the thin portion 41t and reaches the flange 42f. Welding in this case is preferably performed by using any of the above-mentioned methods (e.g., by applying an energy beam, such as a laser).

Although any type of laser may be used, a continuous-wave (CW) laser may be used suitably. Laser conditions (e.g., a spot diameter, a scanning speed, and an output) are appropriately adjustable in accordance with, for example, the materials for the first conductive member 41 and the second conductive member 42 and/or the thickness T of the first conductive member 41. In one example, the spot diameter is preferably 80 µm ± 40 µm. The scanning speed is preferably between about 10 mm/s and about 200 mm/s, more preferably between 40 mm/s and 100 mm/s, and still more preferably between 60 mm/s and 80 mm/s. The output is preferably between about 500 W and about 1200 W, more preferably between 600 W and 900 W, and still more preferably between 700 W and 800 W. Satisfying these conditions enables stable fusion of the second conductive member 42 (Cu), which is relatively difficult to fuse. Satisfying these conditions also prevents the fusion depth from becoming excessively great, making it possible to reduce penetration of Cu contained in the second conductive member 42. Accordingly, the strength of the metal joint 45 to withstand, in particular, a load applied in the direction of rotation is maintainable at a high level.

In this embodiment, the manufacturing method involves forming the metal joint 45 located radially inward of the fastener 43. The manufacturing method thus makes it unlikely that a connection position will deviate, resulting in an improvement in the workability of the metal joining step. When the metal joint 45 is to be formed by welding, the manufacturing method makes it unlikely that a welding position will become unsteady, leading to an improvement in weldability. When the thin portion 41t to be welded, the manufacturing method requires less energy, resulting in an improvement in weldability.

In the present embodiment, the metal joint 45 is formed spirally around the axis C of the flange 42f so as to surround the outer edge of the through hole 41h. The first connection region 45a and the second connection region 45b are preferably formed in this order by performing welding along a continuous path from a radially outward position (which is located away from the through hole 41h) to a radially inward position (which is located close to the through hole 41h). Performing welding toward the through hole 41h not only enables gas and/or heat produced during welding to be smoothly released and/or dispersed through the through hole 41h, but also allows distortion and/or deformation caused by heat to escape to the through hole 41h. This makes it possible to reduce the influence of such distortion and/or deformation on the fastener 43 and/or other component(s). Performing welding toward the through hole 41h also makes it possible to prevent gas and/or heat from remaining between the thin portion 41t and the flange 42f and thus enables stable formation of the metal joint 45 having high strength. The findings of the present inventor suggest that whether welding has been performed from the radially inward position or the radially outward position is determinable based on the shape(s) of welding start point and/or end point.

### Method for Manufacturing Battery 100

A method for manufacturing the battery 100 is characterized by including the method for manufacturing the negative electrode terminal 40, which has been described above. Other manufacturing processes included in the method for manufacturing the battery 100 may be similar to those included in battery manufacturing methods known in the related art. The battery 100 may be manufactured by, for example, a manufacturing method that involves preparing the electrode body 10, the electrolyte, the case body 22, the lid 24, the positive electrode terminal 30, and the negative electrode terminal 40, which have been described above, and that includes an attaching step and a connecting step.

The attaching step involves attaching the positive electrode terminal 30, the positive electrode lead member 13, the negative electrode terminal 40, and the negative electrode lead member 14 to the lid 24. As illustrated, for example, in FIG. 3, the negative electrode terminal 40 and the negative electrode lead member 14 are secured to the lid 24 by swaging (or riveting). Swaging in this case involves interposing the gasket 50 between the negative electrode terminal 40 and the lid 24, and interposing the insulator 60 between the lid 24 and the negative electrode lead member 14. To be more specific, from above the lid 24, the shaft column 42s of the negative electrode terminal 40 yet to be swaged is passed through the tubular portion 51 of the gasket 50, the terminal insertion hole 24h of the lid 24, the through hole 60h of the insulator 60, and the through hole 14h of the negative electrode lead member 14 in this order such that the shaft column 42s protrudes below the lid 24. The shaft column 42s protruding below the lid 24 is then swaged such that compressive force is applied to the shaft column 42s in the up-down direction Z. The rivet portion 40c is thus formed on an end of the shaft column 42s (which is its lower end in FIG. 3) of the negative electrode terminal 40.

As a result of such swaging, the base portion 52 of the gasket 50 and the flat portion of the insulator 60 are compressed, so that the gasket 50, the negative electrode terminal 40, the insulator 60, and the negative electrode lead member 14 are secured to the lid 24 so as to be integral therewith, thus sealing off the terminal insertion hole 24h. In this embodiment, the rivet portion 40c is formed by swaging after the metal joining step has been performed. Alternatively, the metal joining step may be performed after the rivet portion 40c has been formed. The positive electrode terminal 30 and the positive electrode lead member 13 may be attached to the lid 24 in a manner similar to that described for the negative electrode terminal 40 and the negative electrode lead member 14. The negative electrode lead member 14 is welded to the negative electrode collector exposed portion of the negative electrode collector 12, so that the negative electrode of the electrode body 10 is electrically connected to the negative electrode terminal 40. Similarly, the positive electrode lead member 13 is welded to the positive electrode collector exposed portion of the positive electrode collector 11, so that the positive electrode of the electrode body 10 is electrically connected to the positive electrode terminal 30. Consequently, the lid 24, the positive electrode terminal 30, the negative electrode terminal 40, and the electrode body 10 are integral with each other.

The connecting step involves housing the electrode body 10, which is integral with the lid 24, in the inner space of the case body 22, and sealing off the case body 22 with the lid 24. The case body 22 may be sealed off by, for example, welding (e.g., laser-welding) the lid 24 to the case body 22. Subsequently, a nonaqueous electrolyte solution is poured into the case body 22 through an inlet (not illustrated), and the inlet is closed so as to hermetically seal the battery 100. As a result of performing these steps, the battery 100 is manufactured.

The battery 100 is usable for various purposes. The battery 100 is suitably usable for purposes that may involve application of external force (such as vibrations and/or an impact) during use. The battery 100 may typically find suitable use as a motor power source (e.g., a driving power supply) to be installed on any of various vehicles (e.g., a passenger car and a truck). The battery 100 may be installed on any type of vehicle, examples of which include, but are not limited to, a plug-in hybrid electric vehicle (PHEV), a hybrid electric vehicle (HEV), and a battery electric vehicle (BEV). As illustrated in FIG. 8, the batteries 100 may be electrically connected to each other through the bus bars 90 and may thus be suitably used as the battery pack 200. In this case, electric connections between the batteries 100 may be made by, for example, placing the bus bars 90, each having a flat plate shape, between the extensions of the first conductive members of the positive and negative electrode terminals 30 and 40 included in the batteries 100 adjacent to each other. The bus bars 90 are made of, for example, a conductive metal, such as aluminum, an aluminum alloy, nickel, or stainless steel. The bus bars 90 may be electrically connected to the extensions by, for example, welding (such as laser welding).

Although the preferred embodiment of the present application has been described thus far, the foregoing embodiment is only illustrative, and the present application may be embodied in various other forms. The present application may be practiced based on the disclosure of this specification and technical common knowledge in the related field. The techniques described in the claims include various changes and modifications made to the embodiment illustrated above. Any or some of the technical features of the foregoing embodiment, for example, may be replaced with any or some of the technical features of variations described below. Any or some of the technical features of the variations described below may be added to the technical features of the foregoing embodiment. Unless described as being essential, the technical feature(s) may be optional.

In the foregoing embodiment, the metal joint 45 has, for example, a spiral shape, and the first connection region 45a and the second connection region 45b are formed along a continuous path in a unicursal manner. In the foregoing embodiment, the metal joint 45 is provided along the entire circumference of an imaginary circle drawn around the center 42c of the flange 42f. The present application, however, is not limited to these arrangements. In one example, the first connection region 45a and the second connection region 45b may be provided independently, and the metal joint 45 may include, for example, a plurality of annular shapes (e.g., ring shapes), C-shapes, semi-arc shapes, linear shapes, or dashed shapes in the plan view. Alternatively, the metal joint 45 may have any of shapes illustrated in first to fourth variations below. The first connection region 45a and the second connection region 45b may have similar or different shapes.

### First Variation

FIG. 9 is a schematic plan view of a connection of a negative electrode terminal 140 according to the first variation. The negative electrode terminal 140 may be similar to the negative electrode terminal 40 described above, except that the negative electrode terminal 140 includes a metal joint 145. The metal joint 145 has a dual circular shape. To be more specific, the metal joint 145 includes a first connection region 145a and a second connection region 145b having annular shapes (e.g., ring shapes) different in diameter. The first connection region 145a and the second connection region 145b are provided such that they do not overlap each other in the plan view. Accordingly, similarly to the foregoing embodiment, the first variation is able to prevent or reduce occurrence of cracks in the metal joint 145. Although the metal joint 145 has a dual circular shape in the first variation, the metal joint 145 may have, for example, a triple circular shape. The first connection region 145a and the second connection region 145b may each be formed discontinuously instead of continuously, or either the first connection region 145a or the second connection region 145b may be formed discontinuously instead of continuously.

The first connection region 145a and the second connection region 145b may each include an overlapping portion 145c. For example, when the metal joint 145 is formed by laser welding as described in the foregoing embodiment, each overlapping portion 145c is a portion where laser application start and end points overlap each other and welding is thus performed twice. In the plan view, each overlapping portion 145c preferably has a length of less than 5 mm and more preferably has a length of less than 2 mm. Alloying of the first conductive member 41 (Al) and the second conductive member 42 (Cu), such as that described previously, may occur in the overlapping portions 145c. Accordingly, keeping the length of each overlapping portion 145c short makes it possible to prevent or reduce occurrence of cracks in the metal joint 145, resulting in improvements in the strength and durability of the metal joint 145.

From the viewpoint of improving the strength and durability of the metal joint 145, no overlapping portion 145c is preferably provided on the shortest (or linear) conduction path leading to the associated bus bar 90. Each overlapping portion 145c is preferably provided at a position on the metal joint 145 located away from the associated bus bar 90, and is more preferably provided opposite to the associated bus bar 90 with respect to the center 42c of the flange 42f. Assuming that the shortest (or linear) conduction path extends from the center 42c of the flange 42f to the associated bus bar 90 in the 12 o'clock direction, each overlapping portion 145c is provided roughly between the 4 o'clock and 8 o'clock positions, and is preferably provided between the 5 o'clock and 7 o'clock positions. Accordingly, cracks are unlikely to be created on the conduction path leading to the associated bus bar 90.

### Second Variation

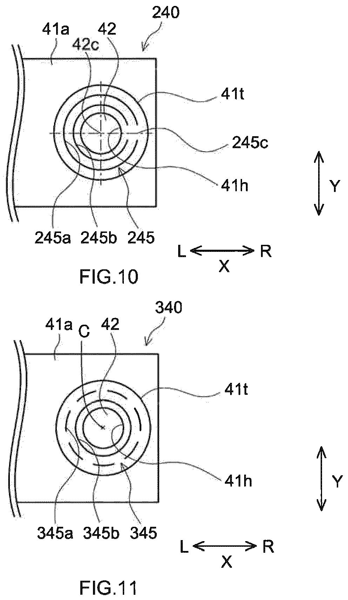

FIG. 10 is a schematic plan view of a connection of a negative electrode terminal 240 according to the second variation. The negative electrode terminal 240 may be similar to the negative electrode terminal 40 described above, except that the negative electrode terminal 240 includes a metal joint 245. The metal joint 245 has a dual substantial C-shape. To be more specific, the metal joint 245 includes a first connection region 245a and a second connection region 245b having substantial C-shapes (e.g., horseshoe shapes) different in size. The first connection region 245a and the second connection region 245b are provided such that they do not overlap each other in the plan view. Accordingly, similarly to the foregoing embodiment, the second variation is able to prevent or reduce occurrence of cracks in the metal joint 245.

The first connection region 245a and the second connection region 245b each include a cut-out 245c. In the plan view, each cut-out 245c preferably has a length of less than 5 mm and more preferably has a length of less than 2 mm. Similarly to the overlapping portions 145c in the first variation described above, the cut-outs 245c are preferably disposed away from the associated bus bar 90 and more preferably disposed opposite to the associated bus bar 90 with respect to the center 42c of the flange 42f. Assuming that the shortest (or linear) conduction path extends from the center 42c of the flange 42f to the associated bus bar 90 in the 12 o'clock direction, each cut-out 245c is provided roughly between the 4 o'clock and 8 o'clock positions, and is preferably provided between the 5 o'clock and 7 o'clock positions. Accordingly, the first connection region 245a and the second connection region 245b are suitably provided on the conduction path leading to the associated bus bar 90, resulting in reduced conduction resistance.

In this variation, the two cut-outs 245c of the first connection region 245a and the second connection region 245b are located at corresponding positions. The cut-outs 245c, however, do not necessarily have to be located at corresponding positions. For example, assuming that the shortest (or linear) conduction path extends from the center 42c of the flange 42f to the associated bus bar 90 in the 12 o'clock direction, one of the two cut-outs 245c may be located between the 5 o'clock and 7 o'clock positions, and the other cut-out 245c may be located between the 11 o'clock and 1 o'clock positions. In this variation, the first connection region 245a and the second connection region 245b each include one cut-out 245c. Alternatively, the first connection region 245a and the second connection region 245b may each include two or more cut-outs 245c, or either the first connection region 245a or the second connection region 245b may include two or more cut-outs 245c. The first connection region 245a and the second connection region 245b may each be formed discontinuously instead continuously, or either the first connection region 245a or the second connection region 245b may be formed discontinuously instead of continuously.

### Third Variation

FIG. 11 is a schematic plan view of a connection of a negative electrode terminal 340 according to the third variation. The negative electrode terminal 340 may be similar to the negative electrode terminal 40 described above, except that the negative electrode terminal 340 includes a metal joint 345. The metal joint 345 includes a first connection region 345a and a second connection region 345b having different shapes. To be more specific, the first connection region 345a has a discontinuous annular shape (e.g., a discontinuous ring shape), and the second connection region 345b has a continuous annular shape (e.g., a continuous ring shape). The first connection region 345a and the second connection region 345b are provided such that they do not overlap each other in the plan view. Accordingly, similarly to the foregoing embodiment, the third variation is able to prevent or reduce occurrence of cracks in the metal joint 345.

When the metal joint 345 is provided with the first connection region 345a having a discontinuous shape (or a dashed shape), the influence of heat generated during formation (e.g., welding) of the metal joint 345 is reduced to a greater degree than when the metal joint 345 is provided with the first connection region 345a having a continuous shape. Accordingly, providing the metal joint 345 including the discontinuous first connection region 345a makes it possible to reduce the influence of distortion on the fastener 43 and/or other component(s). In this variation, the first connection region 345a has point symmetry with respect to the axis C of the flange 42f. Dashed lines that define sub-regions of the first connection region 345a are preferably arranged at regular intervals in the direction of rotation around the axis C of the flange 42f. Dispersing the sub-regions of the first connection region 345a in the direction of rotation around the axis C makes it possible to enhance the strength of the metal joint 345 in the direction of rotation. The dashed lines may each extend in the direction of a normal to the axis C, may each extend in the direction of a tangent to an imaginary circle drawn around the axis C, or may each extend at an angle with respect to the axis C.

### REFERENCE SIGNS LIST

- 10: electrode body
- 14: negative electrode lead member
- 20: battery case
- 24: lid
- 24h: terminal insertion hole
- 40, 140, 240, 340: negative electrode terminal
- 40c: rivet portion
- 41: first conductive member
- 42: second conductive member
- 43: fastener
- 45, 145, 245, 345: metal joint
- 45a, 145a, 245a, 345a: first connection region
- 45b, 145b, 245b, 345b: second connection region
- 145c: overlapping portion
- 245c: cut-out
- 100: battery

## Claims

1. A battery (100) comprising a terminal (40), wherein
the terminal (40) includes
a first conductive member (41) having a plate shape,
a second conductive member (42) including a flange (42f) electrically connected to the first conductive member (41),
a fastener (43) mechanically securing the first conductive member (41) and the flange (42f) of the second conductive member (42) to each other, and
a metal joint (45) metal-joining the first conductive member (41) and the flange (42f) of the second conductive member (42) to each other at a location away from the fastener (43), and
the metal joint (45) includes a first connection region (45a) and a second connection region (45b), the second connection region (45b) being located closer to a center of the flange (42f) than the first connection region (45a) in a plan view.

2. The battery (100) according to claim 1, wherein
the first conductive member (41) is made of aluminum or an aluminum alloy, and
the second conductive member (42) is made of copper or a copper alloy.

3. The battery (100) according to claim 1 or 2, wherein
the metal joint (45) includes a fused and solidified portion in which the first conductive member (41) and the second conductive member (42) are fused together, and
when viewed in cross section, a fusion depth of the fused and solidified portion in the first connection region (45a) is smaller than a fusion depth of the fused and solidified portion in the second connection region (45b).

4. The battery (100) according to claim 1 or 2, wherein
the metal joint (45) includes a fused and solidified portion in which the first conductive member (41) and the second conductive member (42) are fused together, and
when viewed in cross section, a fusion depth of the fused and solidified portion in the first connection region (45a) is smaller than a thickness of a portion of the first conductive member (41) adjacent to the first connection region (45a).

5. The battery (100) according to any one of claims 1 to 4, wherein
the metal joint (45) has a spiral shape in the plan view.

6. The battery (100) according to any one of claims 1 to 4, wherein
the first connection region (145a) and the second connection region (145b) of the metal joint (145) have annular shapes different in diameter such that the first connection region (145a) and the second connection region (145b) do not overlap each other in the plan view.

7. The battery (100) according to any one of claims 1 to 4, wherein
the first connection region (245a) and the second connection region (245b) of the metal joint (245) have substantial C-shapes different in size such that the first connection region (245a) and the second connection region (245b) do not overlap each other in the plan view.

8. The battery (100) according to claim 6 or 7, wherein
at least one of the first connection region (345a) and the second connection region (345b) has a dashed shape in the plan view.

9. The battery (100) according to any one of claims 1 to 8, wherein
the first conductive member (41) includes a recess (41r) in which at least a portion of the flange (42f) of the second conductive member (42) is housed, and
the fastener (43) is formed by securing an inner wall of the recess (41r) of the first conductive member (41) with the portion of the second conductive member (42) housed in the recess (41r).

10. The battery (100) according to any one of claims 1 to 9, wherein
the flange (42f) of the second conductive member (42) includes a constricted portion (42n) fitted to the first conductive member (41), and
the fastener (43) is a fitted portion in which the constricted portion (42n) of the second conductive member (42) and the first conductive member (41) are fitted to each other.

11. The battery (100) according to any one of claims 1 to 10, wherein
the metal joint (45) is disposed closer to the center of the flange (42f) than the fastener (43) in the plan view.

12. The battery (100) according to claim 11, wherein
a portion of the first conductive member (41) located radially inward of the metal joint (45) in the plan view is provided with a through hole (41h).

13. The battery (100) according to any one of claims 1 to 12, wherein
the first conductive member (41) has a substantially rectangular shape, and
the center of the flange (42f) of the second conductive member (42) and a center of the first conductive member (41) are located at different positions in a longitudinal direction of the first conductive member (41).

14. A method for manufacturing a battery (100), the method comprising manufacturing a terminal (40), wherein,
the terminal (40) includes
a first conductive member (41) having a plate shape,
a second conductive member (42) including a flange (42f) electrically connected to the first conductive member (41),
a fastener (43) mechanically securing the first conductive member (41) and the flange (42f) of the second conductive member (42) to each other, and
a metal joint (45) metal-joining the first conductive member (41) and the flange (42f) of the second conductive member (42) to each other at a location away from the fastener (43),
the metal joint (45) is disposed closer to a center of the flange (42f) than the fastener (43) in a plan view,
the metal joint (45) includes a first connection region (45a) and a second connection region (45b), the second connection region (45b) being located closer to the center of the flange (42f) than the first connection region (45a) in the plan view,
a portion of the first conductive member (41) located closer to the center of the flange (42f) than the metal joint (45) in the plan view is provided with a through hole (41h), and
in forming the metal joint (45), the method comprises forming the first connection region (45a) and then forming the second connection region (45b).

15. The method according to claim 14, comprising forming the fastener (43) and then forming the metal joint (45).
